# EUROPÄISCHE PATENTSCHRIFT

(11) **EP 3 346 053 B1**
(45) Veröffentlichungstag und Bekanntmachung des Hinweises auf die Patenterteilung: **21.06.2023**
(21) Anmeldenummer: 17186906.8
(22) Anmeldetag: 18.08.2017
(51) Int. Cl.: D06P 1/00, D06P 1/673

(54) **FÄRBEVERFAHREN FÜR TEXTILE MATERIALIEN**
DYING PROCESS FOR TEXTILE MATERIALS
PROCÉDÉ DE COLORATION POUR MATÉRIAUX TEXTILES

(30) Priorität: 26.08.2016 DE 102016115927
(43) Veröffentlichungstag der Anmeldung: 11.07.2018
(73) Patentinhaber: Brauns-Heitmann GmbH & Co. KG, 34414 Warburg (DE)
(72) Erfinder: Gibbels, Uwe, 34414 Warburg (DE); Füser, Katja, 59602 Rüthen (DE)
(74) Vertreter: Geskes, Christoph

(56) Entgegenhaltungen:
- EP-A1- 0 768 421
- EP-A1- 2 877 538
- EP-A2- 0 236 136
- US-A- 5 030 242

## Beschreibung

Die vorliegende Erfindung betrifft ein Verfahren zum Färben von textilen Materialien.

Bei bekannten Färbesystemen wird unter anderem Salz in die Wäschetrommel einer Waschmaschine und nach etwa 5 Minuten ein Färbemittel in ein Einspülfach der Waschmaschine gegeben. Die verzögerte Zugabe des Färbemittels soll bewirken, dass dieses in eine mit Wasser gefüllte Waschmaschinentrommel gelangt und nicht punktuell zu hoch konzentriert auf das textile Material einwirkt.

Derartige Färbesysteme haben zur Folge, dass das Färbemittel im Einspülfach auch bei einem empfohlenem Nachwaschgang in diesem haften bleiben kann, was unvorteilhaft für nachfolgende Waschgänge ist, weil das Färbemittel auf deren Wäsche ungewollt einwirken kann. Des Weiteren ist durch die verzögerte Zugabe des Färbemittels in das Einspülfach kein automatisierter Prozess gegeben, da auf diese Weise ein manuelles Eingreifen nach etwa 5 Minuten unumgänglich ist. Eine mögliche Folge ist, dass das Färbemittel zeitlich inkorrekt zugeführt und das resultierende Ergebnis der Färbung inakzeptabel wird. Ebenso kann versehentlich gänzlich vergessen werden, das Färbemittel zuzuführen.

Um dem Verbleib des Färbemittels im Einspülfach vorzubeugen, wird bei weiteren bekannten Färbesystemen das Salz gemeinsam mit dem Färbemittel in die Waschmaschinentrommel gegeben. Bei einem vorzeitigen Austritt des Färbemittels aus einem Behälter in die Waschmaschinentrommel kann es passieren, dass das Salz noch nicht ausreichend in der Waschmaschinentrommel verteilt ist und das Färbemittel mit dem Wasser in der Trommel und nicht mit der Faser des textilen Materials reagiert. Ein dabei entstehendes sogenanntes Farbstoff-Hydrolysat ist färbetechnisch wertlos, da es nicht zur Färbung beiträgt. Hydrolysat ist das Produkt einer Hydrolyse, welche die Spaltung einer chemischen Verbindung durch Reaktion mit Wasser ist. Des Weiteren weisen immer mehr Waschmaschinen ein sogenanntes Jet-System auf, das Wasser gleichmäßig durch Düsen in die Waschmaschinentrommel rieseln lässt und den Wasserverbrauch der Waschmaschine reduziert. Das Färbemittel, welches gleichzeitig mit dem Salz in die Waschmaschinentrommel gegeben wird, ist dann gegebenenfalls im Vergleich zu der in der Trommel befindenden Menge Wasser zu stark konzentriert und bewirkt besonders bei hellen Farbstoffen sogenannte wolkenartige Verfärbungen oder Farbstoffflecken auf den textilen Materialien.

Aus der DE 601 23 120 T2 ist ein Spender für Wäschewaschprodukte, insbesondere Gewebeweichmacherprodukte, jedoch nicht zum Färben von Textilien, und zum Einsatz im Wäschetrockner bekannt, wobei der Spender in Form eines hohlen Balles mit vielen Produktspendeöffnungen ausgeführt ist. Der Ball weist darüber hinaus eine Produkteintrittsöffnung auf, in der ein Messbecher in Flüssigkeitsverbindung mit der Produkteintrittsöffnung montiert ist.

Die DE 694 11 707 T2 offenbart eine aus einem hohlen Körper bestehende Dosier- und Abgabevorrichtung zur Abgabe eines flüssigen Reinigungsmittels zum Vorbehandeln und Waschen von Stoffen in einer Waschmaschine, wobei das Reinigungsmittel durch eine sogenannte Durchtrittsöffnung und eine Mündung austritt, wobei zwischen letzteren eine Kugel drehbar gelagert ist. Zum Färben von Textilien ist diese Vorrichtung nicht geeignet.

In der DE 100 03 429 A1 werden eine Wasch- oder Reinigungsmittel-Portion, die in einem Sack oder Beutel verpackt sein kann, zur Beschickung einer Wasch- oder Geschirrspülmaschine vorgeschlagen, wobei die Portion eine erste und eine zweite abgemessene Menge einer wasch- oder reinigungsaktiven Zubereitung für zwei zeitlich versetzt ablaufende Wasch- oder Spülgänge enthält. Eine Färbung von Textilien kann damit nicht erfolgen.

Der DE 295 00 168.2 U1 ist ein Beutel zur Verpackung eines feinpulverigen Färbemittels entnehmbar, der ein wasserunlösliches, aber wasserdurchlässiges Substrat und eine wasserempfindliche Versiegelung aufweist, so dass der Inhalt des Beutels durch Berührung des Beutels mit Wasser und unter mechanischer Bewegung freigesetzt wird.

Die DE 100 33 827 A1 betrifft formstabile Hohlkörper, die eine Wasch-, Reinigungs- oder Spülmittelportion enthalten und unter Wasch-, Reinigungs- oder Spülbedingungen zerfallen. Eine Färbung von Textilien kann auch damit nicht erfolgen.

Aus der DE 600 35 902 T2 ist ein wasserlösliches Waschmittelerzeugnis in Form eines wasserlöslichen Beutels umfassend mindestens zwei Kammern entnehmbar, wobei jede Kammer einen anderen Bestandteil einer Zusammensetzung enthält, wobei der erste Bestandteil eine flüssige Matrix und eine Persäurequelle umfasst. Eine Färbung von Textilien kann damit nicht erfolgen.

Die EP 0 236 136 A2 offenbart ein Produkt zur Abgabe von Behandlungswirkstoffen in die Waschflüssigkeit einer automatischen Wasch- oder Geschirrspülmaschine, umfassend einen Beutel mit mindestens zwei Kammern, umfassend: (i) eine erste Kammer aus wasserunlöslichem Material, die ein erstes Behandlungsmittel enthält, wobei die erste Kammer mindestens eine Öffnungsdichtung aufweist und/oder aus porösem, wasserdurchlässigem Material ausgebildet ist und in der Lage ist, das erste Behandlungsmittel innerhalb eines Zeitraums von 3 Minuten nach Beginn des Waschvorgangs in die Waschflüssigkeit einer Wasch- oder Geschirrspülmaschine freizusetzen; und (ii) eine zweite, nicht geöffnete Kammer, die ein zweites, wasserlösliches oder in Wasser dispergierbares Behandlungsmittel in Partikelform enthält, wobei das zweite Fach zumindest teilweise aus porösem, wasserdurchlässigem Material gebildet ist, durch das das zweite Behandlungsmittel durch die Waschflüssigkeit herausgelöst werden kann, wobei das zweite Fach mit Mitteln zum Verzögern des Herauslösens um mindestens 5 Minuten ab Beginn des Waschvorgangs und/oder zum Verzögern des Herauslösens versehen ist, wobei die Verzögerungs- und/oder Verzögerungsmittel umfassen
(a) eine im Wesentlichen vollständig porenverschließende äußere Beschichtung oder Schicht, die durch die Waschflüssigkeit unterbrochen werden kann, und/oder
(b) die Umhüllung der zweiten Kammer innerhalb einer anderen Beutelabteilung aus porösem, wasserdurchlässigem Material.

Das aus der US 5,030,242 A offenbarte Verfahren zum Erzeugen einer zufälligen Färbung des Textils, wobei das Verfahren die folgenden Schritte umfasst: a) Kontaktieren des Gewebes mit porösen ersten Elementen, die eine erste Lösung in den Porenräumen der ersten Elemente enthalten, um die erste Lösung auf dem Gewebe an den Kontaktbereichen abzuscheiden; und b) weiteres Kontaktieren des Gewebes mit porösen zweiten Elementen, die eine zweite Lösung in den Porenräumen der zweiten Elemente enthalten, um die zweite Lösung auf dem Gewebe an den Kontaktstellen abzuscheiden, wobei eine der ersten und zweiten Lösungen eine Färbelösung und die andere eine Farbfixierlösung beinhaltet, wodurch ein zufälliges Färbemuster im Gewebe fixiert wird.

Die EP 0 768 421 A1 betrifft ein Verfahren zum kontinuierlichen Farben von Garnen aus Cellulose Fasern mit Reaktivfarbstoffen sowie eine Vorrichtung zur Durchführung dieses Verfahrens. Das Verfahren ist dadurch gekennzeichnet, dass es im Wesentlichen folgende Schritte umfasst: Imprägnierung des von einem oder mehreren Trägern Verfahren zum kontinuierlichen Farben von Garnen aus Cellulosefasern mit Reaktivfarbstoffen sowie eine Vorrichtung zur Durchführung dieses Verfahrens. Das Verfahren ist dadurch gekennzeichnet, dass es im Wesentlichen folgende Schritte umfasst: Imprägnierung des von einem oder mehreren Trägern kontinuierlich schnellabgewickelten und auf einen oder mehrere Träger umgewickelten Garns mit mindestens einem faserreaktiven Farbstoff in wässriger Lösung und mindestens einem alkalisch wirkenden Agens in wässriger Lösung, sowie Fixierung des Farbstoffs.

WO 2014/006132 A1 offenbart ein festes Farbstoffprodukt, das zum Ändern der Farbe eines Stoffes und zur Verwendung in einer Haushaltswaschmaschine geeignet ist, wobei das Farbstoffprodukt: (a) einen wasserdurchlässigen Beutel, der aus einem nicht gewebten, wasserdurchlässigen Material gebildet ist und eine wasserlösliche Farbstoffzusammensetzung enthält, die etwa 40 bis etwa 70 Gew.-% eines oder mehrerer Reaktivfarbstoffe und etwa 30 bis etwa 60 Gew.-% eines oder mehrerer Salze oder einer oder mehrerer Alkalien oder einer Mischung derselben umfasst, wobei die Prozentangaben Gewichtsprozente der gesamten Farbstoffzusammensetzung im wasserdurchlässigen Beutel sind; und (b) ein wasserundurchlässiges Behältermittel, das eine wasserlösliche Farbstoff-Fixierzusammensetzung enthält, die eine oder mehrere Alkalien umfasst, allein oder in Kombination mit einem oder mehreren Salzen; wobei das Gewichtsverhältnis der Farbstoffzusammensetzung zur Farbstoff-Fixierzusammensetzung von etwa 1 :5 bis etwa 1 :20 beträgt.

Schließlich offenbart die DE 602 23 691 T2 eine in Wasser lösliche oder dispergierbare Verpackung und ein Verfahren zur kontrollierten Freisetzung von verschiedenen Mitteln wie beispielsweise agrochemischen Substanzen, Reinigungsmitteln und Nahrungsmittelkomponenten einschließlich Farbmitteln für Nahrungsmittel. Eine Färbung von Textilien kann somit auch damit nicht erfolgen.

Aufgabe der vorliegenden Erfindung ist es somit, ein Verfahren zum Färben von textilen Materialien zur Verfügung zu stellen, bei dem keine Rückstände im Einspülfach verursacht, und Färbemittel mit den Fasern des zu färbenden textilen Materials reagiert, aber nur wenig oder gar nicht mit dem Wasser in der Trommel reagiert. Dabei sollen keine Farbstoffflecken, insbesondere keine punktförmigen Farbstoffflecken (sogenannte "Spots"), auf dem zu färbenden textilen Material verursacht werden.

Überraschenderweise wurde nun gefunden, dass sich durch eine räumliche Trennung der für den Färbevorgang benötigten Reagenzien oder Reaktanden, d.h. insbesondere des eingesetzten mindestens einen Farbstoffes, der bevorzugt in Form einer Farbstofflösung, die weiter bevorzugt salzfrei ist, vorliegt, einerseits und des Salzes und gegebenenfalls des Fixierers andererseits in separaten Behältern eine Reaktion der Reagenzien untereinander statt auf der Faser des zu färbenden textilen Materials weitgehend oder nahezu vollständig unterdrücken oder verhindern lässt, dennoch aber eine ausreichende Menge an Reagenzien in die Färbeflotte und an die textilen Materialien gelangt, so dass die beabsichtigte Färbung, bevorzugt Spot-frei, erfolgt. Die getrennte Bereitstellung in verschiedenen Behältern bewirkt eine verlangsamte, aber nicht zu stark verlangsamte Abgabe der Reagenzien in die Färbeflotte, so dass zwar die Färbung der Fasern des textilen Materials erfolgen kann, jedoch keine derart großen Mengen an Farbstoff und Salz und gegebenenfalls Fixierer auf dem textilen Material auftreffen, dass unerwünschte Farbflecken (Spots) erzeugt werden.

Die genannte Aufgabe wird daher erfindungsgemäß gelöst durch ein Verfahren gemäß Anspruch 1.

Erfindungsgemäß wird die Aufgabe mittels eines Verfahrens zum Färben von textilen Materialien umfassend die Schritte gelöst:
(i) Bereitstellen eines Färbesystems für textile Materialien umfassend mindestens ein Salz in mindestens einem ersten Behälter und mindestens einen Farbstoff in mindestens einem zweiten Behälter, wobei der mindestens eine erste Behälter eine erste Öffnung oder eine erste Gruppe von mehreren Öffnungen, und der mindestens eine zweite Behälter eine zweite Öffnung oder eine zweite Gruppe von mehreren Öffnungen aufweist, wobei der mindestens eine zweite Behälter derart ausgebildet ist, dass der Beginn der Abgabe des oder der Farbstoffe zeitlich nach der teilweisen oder vollständigen Abgabe des Salzes aus dem mindestens einen ersten Behälter geschieht, wobei sich der zeitliche Verzug des Beginnes der Abgabe des Farbstoffes auf den Beginn der Abgabe des Salzes bezieht und in einem Bereich von etwa 1 Minute bis etwa 10 Minuten liegt;
(ii) Überführen der in Schritt (i) erhaltenen Behälter in einen dritten Behälter;
(iii) Beladen des dritten Behälters mit mindestens einem zu färbenden textilen Material; und
(iv) Zugabe von Wasser zu dem wie in Schritt (ii) und (iii) beladenen dritten Behälter, wobei
(v) das mindestens eine Salz und/oder der mindestens eine Fixierer oder die mindestens eine Fixierer-Salz-Mischung aus dem mindestens einen ersten Behälter und/oder der mindestens eine Farbstoff aus dem mindestens einen zweiten Behälter durch die Öffnung oder Öffnungen des jeweiligen Behälters zeitlich verzögert und/oder dosiert abgegeben werden,
(vi) das mindestens eine Salz und/oder der mindestens eine Fixierer oder die mindestens eine Fixierer-Salz-Mischung aus dem mindestens einen ersten Behälter (10) auszutreten beginnt bevor der mindestens eine Farbstoff aus dem mindestens einen zweiten Behälter auszutreten beginnt; und
(vii) das Salz und/oder der Fixierer oder die Fixierer-Salz-Mischung und/oder der mindestens eine Farbstoff, wie vorstehend unter (vi) und (vii) genannt, in dem jeweiligen Behälter suspendiert und/oder gelöst in Wasser sind.

Die vorliegende Erfindung betrifft ein Verfahren zum Färben von textilen Materialien umfassend die Schritte:
(i) Bereitstellen eines Färbesystems für textile Materialien umfassend mindestens ein Salz in mindestens einem ersten Behälter und mindestens einen Farbstoff in mindestens einem zweiten Behälter, wobei der mindestens eine erste Behälter eine erste Öffnung oder eine erste Gruppe von mehreren Öffnungen, und der mindestens eine zweite Behälter eine zweite Öffnung oder eine zweite Gruppe von mehreren Öffnungen aufweist, wobei der mindestens eine zweite Behälter derart ausgebildet ist, dass der Beginn der Abgabe des oder der Farbstoffe zeitlich nach der teilweisen oder vollständigen Abgabe des Salzes aus dem mindestens einen ersten Behälter geschieht, wobei sich der zeitliche Verzug des Beginnes der Abgabe des Farbstoffes auf den Beginn der Abgabe des Salzes bezieht und in einem Bereich von etwa 1 Minute bis etwa 10 Minuten liegt;
(ii) Überführen der in Schritt (i) erhaltenen Behälter in einen dritten Behälter;
(iii) Beladen des dritten Behälters mit mindestens einem zu färbenden textilen Material; und
(iv) Zugabe von Wasser zu dem wie in Schritt (ii) und (iii) beladenen dritten Behälter, wobei
(v) das mindestens eine Salz und/oder der mindestens eine Fixierer oder die mindestens eine Fixierer-Salz-Mischung aus dem mindestens einen ersten Behälter und/oder der mindestens eine Farbstoff aus dem mindestens einen zweiten Behälter durch die Öffnung oder Öffnungen des jeweiligen Behälters zeitlich verzögert und/oder dosiert abgegeben werden,
(vi) das mindestens eine Salz und/oder der mindestens eine Fixierer oder die mindestens eine Fixierer-Salz-Mischung aus dem mindestens einen ersten Behälter (10) auszutreten beginnt bevor der mindestens eine Farbstoff aus dem mindestens einen zweiten Behälter auszutreten beginnt; und
(vii) das Salz und/oder der Fixierer oder die Fixierer-Salz-Mischung und/oder der mindestens eine Farbstoff, wie vorstehend unter (vi) und (vii) genannt, in dem jeweiligen Behälter suspendiert und/oder gelöst in Wasser sind.

Die Erfindung kann mit einem ersten Behälter realisiert werden, insbesondere dann, wenn mindestens ein Salz, ganz besonders dann, wenn zusätzlich zu dem mindestens einen Salz mindestens ein Fixierer in diesem vorliegt, und noch weiter bevorzugt, wenn nur genau ein Salz eingesetzt ist, und noch weiter bevorzugt, wenn genau ein Salz und genau ein Fixierer, von Verunreinigungen abgesehen, zugesetzt ist. Verunreinigungen in geringer Menge von etwa kleiner 0,2 Gew.-%, bezogen auf die Gesamtmenge der im ersten Behälter enthaltenen Menge, können im ersten Behälter vorliegen, sind aber vernachlässigbar in Hinblick auf die Eigenschaften und Wirkungen des vom ersten Behälter umfassten mindestens einen Salzes und/oder mindestens einen Fixierers. Ein erster Behälter eignet sich besonders dann, wenn eine Fixierer-Salz-Mischung verwendet wird. Zwei erste Behälter eignen sich besonders für den Fall, wenn mindestens ein Salz und mindestens ein Fixierer jeweils in einem eigenen ersten Behälter, ganz besonders aber dann, wenn genau ein Salz und genau ein Fixierer jeweils in einem eigenen ersten Behälter eingesetzt werden. Die Verwendung von nur einem oder zwei ersten Behältern, besonders von einem einzigen ersten Behälter hat den Vorteil der umweltfreundlichen Begrenzung der aufgewendeten (Verpackungs-) Materialmenge und ist auch in der Regel kostengünstiger als die Verwendung von mehr als einem ersten Behälter.

Für den Färbevorgang wird das Färbesystem zusammen mit dem zu färbenden textilen Material in einem dritten Behälter platziert. In dem dritten Behälter bildet sich im Laufe des Färbevorganges und des erfindungsgemäßen Verfahrens das Färbebad, auch Färbeflotte genannt. Bevorzugt ist der dritte Behälter eine Wäschetrommel und weiter bevorzugt eine Wäschetrommel einer Waschmaschine (Waschmaschinentrommel). Unter Waschmaschine wird hierin insbesondere eine Waschmaschine oder Waschautomat für den Privathaushalt verstanden, insbesondere eine Waschmaschine oder Waschautomat mit einer Wäschetrommel, die ein Fassungsvermögen von etwa 4 bis etwa 8 kg, etwa 4 bis etwa 7 kg oder etwa 5 bis etwa 6 kg Trockenwäsche aufweist. Das erfindungsgemäße Färbesystem wird nicht in ein Einspülfach einer Waschmaschine eingegeben. Daher ist unter einem dritten Behälter im Sinne der vorliegenden Erfindung nicht ein Einspülfach einer Waschmaschine zu verstehen.

Wird im Rahmen der Erfindung der Begriff "etwa" oder "im Wesentlichen" im Bezug auf Werte oder Wertebereiche verwendet, ist hierunter dasjenige zu verstehen, was der Fachmann in dem gegebenen Zusammenhang als fachmännisch üblich ansehen wird. Insbesondere sind Abweichungen der angegebenen Werte von +/- 10%, bevorzugt +/- 5%, weiter bevorzugt +/- 2%, von den Begriffen "etwa" und "im Wesentlichen" umfasst.

Bevorzugt wird das Färbesystem in dem dritten Behälter bei einer Wassertemperatur in einem Bereich von etwa 25°C bis etwa 95°C, weiter bevorzugt in einem Bereich von etwa 30°C bis etwa 65°C und besonders bevorzugt in einem Bereich von etwa 30°C bis etwa 40°C eingesetzt, und bevorzugt über einen Zeitraum von etwa 15 Minuten bis etwa 300 Minuten, weiter bevorzugt über einen Zeitraum von etwa 30 Minuten bis etwa 90 Minuten.

Der mindestens eine zweite Behälter ist derart ausgebildet, dass der Beginn der Abgabe des oder der Farbstoffe, gegebenenfalls, und bevorzugt zusammen mit mindestens einem Lösungsmittel und einem oder mehreren Hilfsmitteln, zeitlich nach der teilweisen oder vollständigen Abgabe des Salzes aus dem mindestens einen ersten Behälter geschieht. Der zeitliche Verzug des Beginnes der Abgabe des Farbstoffes bezieht sich auf den Beginn der Abgabe des Salzes und/oder Fixierers oder der Fixierer-Salz-Mischung und liegt in einem Bereich von etwa 1 Minute bis etwa 10 Minuten, weiter bevorzugt in einem Bereich von etwa 2 Minuten bis etwa 8 Minuten und besonders bevorzugt in einem Bereich von etwa 4 Minuten bis etwa 6 Minuten. Bevorzugt ist die vollständige oder im Wesentlichen vollständige Abgabe des Salzes und/oder Fixierers oder der Fixierer-Salz-Mischung aus dem ersten Behälter abgeschlossen, bevor die Abgabe des Farbstoffes aus dem zweiten Behälter beginnt. Die Abgabe des Farbstoffes aus dem zweiten Behälter kann damit auch bereits einsetzen, wenn die Abgabe des Salzes und/oder Fixierers oder der Fixierer-Salz-Mischung aus dem ersten Behälter noch nicht vollständig abgeschlossen ist.

Bevorzugt weisen die erste Öffnung oder die erste Gruppe von mehreren Öffnungen des ersten Behälters und die zweite Öffnung oder die zweite Gruppe von mehreren Öffnungen des zweiten Behälters eine Öffnungsweite von etwa 0,5 µm bis etwa 14 cm, weiter bevorzugt bis etwa 11 cm, noch weiter bevorzugt bis etwa 10 cm, auf. In einer besonderen Ausführungsform wird durch geeignete Wahl der Öffnungsweite der Öffnungen der ersten und zweiten Behälter, insbesondere im Bereich von etwa 0,5 µm bis etwa 14 cm, , weiter bevorzugt bis etwa 11 cm, noch weiter bevorzugt bis etwa 10 cm, bevorzugt etwa 0,5 µm bis etwa 10 mm und besonders bevorzugt etwa 0,5 µm bis etwa 1 mm, ein zeitlicher Verzug erreicht zwischen der Abgabe des mindestens einen Farbstoffes aus dem mindestens einen zweiten Behälter und der Abgabe des mindestens einen Salzes und gegebenenfalls Fixierers oder der Fixierer-Salz-Mischung aus dem mindestens einen ersten Behälter von etwa 1 Minute bis etwa 10 Minuten, bevorzugt von etwa 2 Minuten bis etwa 8 Minuten und besonders bevorzugt von etwa 4 Minuten bis etwa 6 Minuten, wobei der Austritt der Inhaltsstoffe oder Reagenzien aus dem ersten Behälter zeitlich früher als aus dem zweiten Behälter erfolgt, so dass der Niederschlag von zu großen Mengen Farbstoff auf der Faser des textilen Materials und damit die Bildung von Flecken (Spots) vermieden wird.

Textile Materialien gemäß der vorliegenden Erfindung sind insbesondere solche, die aus Baumwolle, anderen Naturfasern, insbesondere Naturfasern pflanzlichen Ursprungs, insbesondere Leinen, Jute, Hanf, Bast oder Flachs, Naturfasern tierischen Ursprungs, insbesondere Wolle oder Seide, synthetischen Fasern, insbesondere Polyamid oder Polyester oder Mischungen der vorgenannten Materialien hergestellt sind. Substantiv- und Direktfarbstoffe eignen sich erfindungsgemäß vor allem für textile Materialien, die aus Baumwolle, anderen Naturfasern, insbesondere Naturfasern pflanzlichen Ursprungs, insbesondere Leinen, Jute, Hanf, Bast oder Flachs, Naturfasern tierischen Ursprungs, insbesondere Wolle oder Seide, synthetischen Fasern, insbesondere Polyamid oder Polyester oder Mischungen der vorgenannten Materialien hergestellt sind. Reaktivfarbstoffe eignen sich erfindungsgemäß besonders für textile Materialien, die aus Baumwolle, anderen Naturfasern pflanzlichen Ursprungs, insbesondere Leinen, Jute, Hanf, Bast oder Flachs, Wolle, Polyamid oder Mischungen der vorgenannten Materialien hergestellt sind. Ansonsten eignen sich Reaktivfarbstoffe bei synthetischen Fasern, wie Polyester, oder Seide, nur, wenn diese Fasern in Mischung mit anderen, färbbaren Naturfasern, insbesondere ausgewählt aus der Gruppe bestehend aus Baumwolle, Leinen, Wolle, Jute, Hanf, Bast und Flachs vorliegen.

Das Salz und/oder der Fixierer oder die Fixierer-Salz-Mischung sind in mindestens einem ersten Behälter und der mindestens eine Farbstoff in mindestens einem zweiten Behälter aufgenommen, für einen direkten Einsatz im dritten Behälter. Der direkte Einsatz bedeutet, dass der mindestens eine erste und zweite Behälter vor Beginn eines Färbevorganges in den dritten Behälter hineingegeben oder in diesem platziert werden. Dementsprechend werden bei Einsatz einer Waschmaschine vor Beginn eines Wasch- beziehungsweise Färbeprogramms einer Waschmaschine der mindestens eine erste und zweite Behälter in die Wäschetrommel zusammen mit mindestens einem zu färbenden textilen Material hineingegeben oder in dieser platziert. Bevorzugt ist der mindestens eine erste Behälter als Beutel oder Dose und bevorzugt der mindestens eine zweite Behälter als Beutel, Dose oder Flasche ausgebildet. Insbesondere sind sowohl der erste Behälter als auch der zweite Behälter als Beutel oder Dose, bevorzugt als Beutel ausgebildet. Ganz besonders bevorzugt ist der erste Behälter als Beutel und der zweite Behälter als Flasche ausgebildet, wobei weiter bevorzugt genau ein solcher erster Behälter und ein solcher zweiter Behälter im erfindungsgemäßen Färbesystem vorliegen. Der erste und der zweite Behälter bilden einen ihren Inhalt von der Umwelt im Wesentlichen abtrennenden Raum. Ist der erste Behälter als Beutel ausgebildet, wird er vor Einsatz, bevorzugt vor Einsetzen in die Wäschetrommel einer Waschmaschine, aufgeschnitten. Ist der zweite Behälter als Flasche ausgebildet, so wird vor Einsatz, bevorzugt vor Einsetzen in die Wäschetrommel einer Waschmaschine, ein Schraubverschluss oder sonstiger Verschluss der Flasche entfernt und damit die mindestens eine Öffnung derselben freigegeben.

Bevorzugt sind der erste Behälter und der zweite Behälter nicht ineinander verschachtelt. Hierunter ist zu verstehen, dass der mindestens eine erste Behälter oder der mindestens eine zweite Behälter weder teilweise noch vollständig in den jeweils anderen ersten oder zweiten Behälter eingesetzt ist oder wird. Bevorzugt sind der erste Behälter und der zweite Behälter voneinander getrennte, das heißt nicht materialverbundene, Teile beziehungsweise Behältnisse. Besonders bevorzugt sind der innere Bereich des ersten und des zweiten Behälters voneinander getrennt, insbesondere fließ- oder hydrodynamisch derart getrennt, und/oder nicht flüssigkeitsübertragend verbunden, dass kein Austausch von Inhaltsstoffen oder von in Wasser gelösten Inhaltsstoffen zwischen den beiden Behältern erfolgt. Dies gilt im geschlossenen Zustand der Behälter.

Die Größen der Öffnungen der beiden Behälter können so gewählt werden, dass, wenn die Verschlüsse der Öffnungen der Behälter entfernt sind, ihr jeweiliger Inhalt zwar nach außen in die Färbeflotte abgegeben wird, aber nur zu einem geringen Maße oder gar nicht eine Durchmischung des Inhaltes eines Behälters mit einem Teil des Inhaltes des jeweils anderen Behälters in einem der Behälter erfolgt. Dadurch wird eine direkte Reaktion des Salzes und/oder Fixierers oder der Fixierer-Salz-Mischung mit dem Farbstoff in einer unerwünschten Nebenreaktion (Hydrolyse des Farbstoffes) ohne Färbung des textilen Materials stark reduziert oder vollständig vermieden. Durch eine geeignete Wahl der Größe der Öffnungen der Behälter und/oder eine verlangsamte Entfernung der Verschlüsse der Öffnungen der zweiten Behälter wird die Abgabe der Inhaltsstoffe aus den Behältern in das Wasser oder die Färbeflotte so verlangsamt, dass die Konzentration dieser Inhaltsstoffe (Reaktanden) zwar auf dem textilen Material für den dort gewünschten Färbeprozess ausreichend hoch ist, aber niedrig genug, um Nebenwirkungen, wie insbesondere Nebenreaktionen wie die Farbstoffhydrolyse, vor allem aber die Fleck-/Spot-Bildung, stark zu reduzieren oder ganz zu vermeiden.

Weiterhin können zusätzlich oder alternativ der äußere Bereich des ersten und des zweiten Behälters voneinander getrennt sein. Die Trennung des äußeren Bereiches ermöglicht eine unabhängige Bewegung des ersten vom zweiten Behälter und umgekehrt, insbesondere eine derart unabhängige Bewegung des ersten und zweiten Behälters im dritten Behälter.

Die Öffnung oder Öffnungen des ersten und/oder zweiten Behälters ist oder sind jeweils mittels mindestens eines Verschlusses, ausgewählt aus der Gruppe bestehend aus nicht-wasserlöslichen Verschlüssen verschlossen, wobei die nicht-wasserlöslichen Verschlüsse insbesondere ausgewählt sind aus der Gruppe bestehend aus Klappverschlüssen, Drehverschlüssen, Verschlüssen mit Sollbruch- oder Aufreißnaht, Siegelnähten und nicht-wasserlöslichen Schichten wie insbesondere Kunststofffolien. Der Verschluss ist öffenbar und/oder entfernbar. Für eine Mehrfachverwendung des zweiten Behälters ist der Verschluss bevorzugt wiederverschließbar ausgebildet. In einer Ausführungsform ist der Verschluss an einer Seite mit dem zweiten Behälter und bevorzugt an einem Flaschenhals klappbar und/oder lösbar verbunden. In einer weiteren Ausführungsform des zweiten Behälters weist der Verschluss ein Innengewinde und der zweite Behälter um die zweite Öffnung oder die zweite Gruppe von mehreren Öffnungen herum ein entsprechendes Gegen- beziehungsweise Außengewinde auf. Die klappbare Funktion ist bevorzugt mit einem Scharnier und weiter bevorzugt mit einem elastischen Zwischenstück, zwischen Verschluss und dem Flaschenhals, realisiert.

In einer Ausführungsform weist der zweite Behälter, der weiter bevorzugt als Flasche ausgebildet ist, an einem oberen Ende des Flaschenhalses eine Dosierhaube auf. Die Dosierhaube deckt den bevorzugt zylindrischen Flaschenhals im Wesentlichen oberseitig ab. Bevorzugt mittig auf der Dosierhaube weist der Flaschenhals die mindestens eine zweite Öffnung auf. Die mindestens eine zweite Öffnung ist bevorzugt rund ausgebildet. Sie erstreckt sich bevorzugt vollständig durch die Dosierhaube hindurch.

Bevorzugt weist der Verschluss, der weiter bevorzugt als Klappverschluss oder Drehverschluss ausgebildet ist, zentriert auf einer Verschlussoberseite und in einen Hohlraum des Verschlusses hinein erstreckend mindestens einen Zapfen auf. Der Zapfen des Verschlusses weist bevorzugt eine verschließende Funktion beziehungsweise stopfende Funktion auf. Bevorzugt ist die Öffnungsweite der mindestens einen zweiten Öffnung des zweiten Behälters so gewählt, dass diese in etwa einer Breite des mindestens einen Zapfens entspricht. Ist der Verschluss mit dem zweiten Behälter verschraubt oder auf diesem aufgesteckt, so verschließt der Zapfen über dessen Breite die zweite Öffnung des zweiten Behälters. Sind mehrere zweite Öffnungen vorgesehen, sind in entsprechender Anzahl Zapfen vorzusehen, die in diese zweiten Öffnungen eingreifen.

Die zweite Öffnung oder zweiten Öffnungen des zweiten Behälters sind in einer weiter bevorzugten Ausführungsform mit solchen Verschlüssen, die wasserlöslich und/oder alkalilöslich sind, verschlossen. Alkalilöslich bedeutet löslich in einem wässrigen Medium mit einem pH-Wert größer 7, d.h. im alkalischen Bereich. In einer weiteren Ausführungsform weist der zweite Behälter als Verschluss für die zweite Öffnung oder die zweite Gruppe von mehreren Öffnungen wasserlösliche und/oder alkalilösliche Verschlüsse auf, die ausgewählt sind aus der Gruppe bestehend aus wasserlöslichen und/oder alkalilöslichen Schichten und Stopfen, insbesondere wasserlöslichen und/oder alkalilöslichen Schichten und Stopfen umfassend eine oder mehrere Fettsäuren. Die im Alkalischen lösbare Schicht kann vorzugsweise carboxyliertes Acrylpolymer umfassen. Eine alkalisch wirkende Substanz wie NaOH oder KOH ist bevorzugt im ersten Behälter zusammen mit dem Salz und/oder Fixierer oder in der Fixierer-Salz-Mischung enthalten.

In einer weiteren Ausführungsform ist der Verschluss für die zweite Öffnung oder die zweite Gruppe von mehreren Öffnungen die Schicht oder der gießbarer Stopfen, die oder der sich ab Erreichen des Schmelzpunktes und/oder im Kontakt mit Wasser oder alkalischem Medium auflöst.

Die Schicht oder der gießbare Stopfen sind bevorzugt ausgewählt aus einer oder mehreren Fettsäuren, ausgewählt aus der Gruppe bestehend aus gesättigten Fettsäuren, insbesondere ausgewählt aus der Gruppe bestehend aus Decansäure (C₉H₁₉COOH), Undecansäure (C₁₀H₂₁COOH), Dodecansäure (C₁₁H₂₃COOH), Tridecansäure (C₁₂H₂₅COOH), Tetradecansäuse (C₁₃H₂₇COOH), Pentadecansäure (C₁₄H₂₉COOH), Hexadecansäre (C₁₅H₃₁COOH), Heptadecansäure (C₁₆H₃₃COOH), Octadecansäure (C₁₇H₃₅COOH), Nonadecansäure (C₁₈H₃₇COOH) und Eicosan-/Icosansäure (C₁₉H₃₉COOH).

Besonders bevorzugt weisen die zweite Öffnung oder die zweite Gruppe von mehreren Öffnungen des zweiten Behälters jeweils eine Öffnungsweite von etwa 0,5 mm bis etwa 10 mm, weiter bevorzugt von etwa 1 mm bis etwa 5 mm und besonders bevorzugt von etwa 1,5 mm bis etwa 2,5 mm auf.

Der mindestens eine erste Behälter für das Salz und/oder den Fixier oder die Fixierer-Salz-Mischung ist bevorzugt aus Kunststoff, insbesondere Polyethylen und/oder Polypropylen. In einer Ausführungsform ist der erste Behälter aus faserartigen Materialien wie beispielsweise Polyester-Gewebe und/oder zumindest in Teilbereichen ein wasserdurchlässiger Faserbeutel. In einer weiteren Ausführungsform sind der erste Behälter und der zweite Behälter aus faserartigen Materialien gefertigt und/oder zumindest in Teilbereichen oder vollständig jeweils als ein wasserdurchlässiger Faserbeutel ausgebildet.

In einer bevorzugten Ausführungsform ist der mindestens eine erste Behälter als Beutel ausgebildet und weist mindestens eine erste und gegebenenfalls mindestens eine zweite Siegelnaht auf. Bevorzugt ist die mindestens eine erste Siegelnaht an einem oberen Ende des Beutels angeordnet und verschließt den Inhalt des Beutels dicht von der Umwelt. Die mindestens eine zweite Siegelnaht ist im Wesentlichen parallel verlaufend zur einen ersten Siegelnaht angeordnet. Die eine zweite Siegelnaht ist vom oberen Ende des Beutels ausgehend etwas unterhalb der einen ersten Siegelnaht und näher zu einem unteren Ende des Beutels als die eine erste Siegelnaht angeordnet. Der Abstand zwischen der einen ersten Siegelnaht und der im Wesentlichen parallel zu dieser verlaufenden einen zweiten Siegelnaht ist entsprechend so gewählt, dass nach einem Abtrennen der einen ersten Siegelnaht, bevorzugt mittels einer Schere, die eine zweite Siegelnaht nicht beschädigt wird. Die eine zweite Siegelnaht ist deutlich näher zum oberen Ende des Beutels als zum unteren Ende des Beutels angeordnet. Bevorzugt befindet sich die mindestens eine zweite Siegelnaht in Kontakt mit dem Inhalt und grenzt unmittelbar an diesen an. Bevorzugt weist der erste Behälter nur eine erste Siegelnaht auf, die vorzugsweise über die gesamte Breite des Beutels am oberen Ende desselben angeordnet ist, und die durch Aufschneiden bevorzugt über die gesamte Breite des Beutels geöffnet wird.

Bevorzugt ist die erste Öffnung oder die erste Gruppe von mehreren Öffnungen des ersten Behälters eine oder mindestens eine Unterbrechung der mindestens einen zweiten Siegelnaht und wird durch Entfernen der mindestens einen ersten Siegelnaht freigelegt. Ohne die Entfernung der einen ersten Siegelnaht bleibt der Innenraum des ersten Behälters von der Umwelt abgetrennt. Der Abstand der einen ersten Siegelnaht und der einen zweiten Siegelnaht ist entsprechend gering gewählt, dass sich im Wesentlichen kein Inhalt des ersten Behälters zwischen der einen ersten Siegelnaht und der einen zweiten Siegelnaht sammelt. Die erste Öffnung beziehungsweise die bevorzugte eine Unterbrechung der einen zweiten Siegelnaht ist bevorzugt in etwa mittig zu einer Längserstreckung der einen zweiten Siegelnaht angeordnet und bildet eine definierte Öffnungsweite.

In einer alternativen Ausführungsform weisen die erste Siegelnaht und die zweite Siegelnaht keinen Zwischenraum auf und verlaufen direkt aneinander und bilden eine gemeinsame Siegelfläche. Bevorzugt bildet die erste Öffnung, die bevorzugt zwischen oder in der mindestens einen zweiten Siegelnaht angeordnet ist, eine Nut. Die Nut ist bevorzugt rechteckig und weiter bevorzugt dreieckig ausgebildet und läuft angrenzend zur einen ersten Siegelnaht im Wesentlichen spitz zusammen, und bevorzugt mit der Spitze auf die erste Siegelnaht zeigend. Beim Abtrennen der ersten Siegelnaht, in Richtung der Längserstreckung der ersten Siegelnaht, wird bevorzugt ein Teil der zweiten Siegelnaht mit abgetrennt. Der bevorzugte Schnitt wird etwas weiter in Richtung eines Inhaltes des Beutels angesetzt. Je nach Inhalt ist durch die dreieckige Gestaltung der ersten Öffnung eine variable Wahl der Lage der Schnittlinie beim Abtrennen der Siegelnähte und somit der Größe der ersten Öffnung gegeben. Durch die dreieckige Gestaltung wird die erste Öffnung umso größer, je mehr von der zweiten Siegelnaht abgetrennt wird.

In einer weiteren Ausführungsform sind der erste und/oder zweite Behälter zumindest in Teilbereichen als wasserdurchlässiger Faserbeutel ausgebildet. Der wasserdurchlässige Faserbeutel weist bevorzugt eine erste Gruppe von mehreren Öffnungen in Form von Poren zwischen den Fasern auf. Bevorzugt sind der erste und/oder der zweite Behälter im Wesentlichen vollständig als wasserdurchlässige Faserbeutel ausgebildet. Weiter bevorzugt erstreckt sich der Bereich der Fasern nur über eine Beutelvorderseite oder eine Beutelrückseite, die sich im Wesentlichen zwischen dem oberen Ende und dem unteren Ende des Beutels erstreckt. Die Beutelvorderseite und die Beutelrückseite, die sich über das obere und das untere Ende des Beutels, sowie zwei seitlichen Enden des Beutels erstrecken, sind über die zwei seitlichen Enden des Beutels miteinander verbunden. Die nicht mit Fasern ausgeführte Beutelvorderseite oder Beutelrückseite ist bevorzugt aus Kunststoff und wasserundurchlässig. Weiter bevorzugt ist die jeweils andere mit Fasern ausgeführte Beutelseite mit einer ebenfalls wasserundurchlässigen Transportfolie abgedeckt, die entfernbar ist und entfernt wird bevor der Beutel in dem dritten Behälter platziert wird.

Bevorzugt weisen die Poren des Faserbeutels eine Öffnungsweite in einem Bereich von etwa 0,5 µm bis etwa 1 mm, weiter bevorzugt in einem Bereich von etwa 1 µm bis etwa 150 µm und besonders bevorzugt in einem Bereich von etwa 10 µm bis etwa 50 µm auf.

Wird im Rahmen der Erfindung der Begriff "Öffnungsweite" verwendet, ist hierunter bei im Wesentlichen runden Öffnungen der Durchmesser der Öffnung und bei ellipsoiden oder unrunden wie beispielsweise rechteckförmigen Öffnungen der Abstand zwischen den zwei am weitesten voneinander entfernt gegenüberliegenden Punkten auf den Rändern der Öffnung zu verstehen.

Der Farbstoff kann in Pulverform vorliegen oder bevorzugt in mindestens einem, bevorzugt genau einem, Lösungsmittel gelöst. Die Fixierer-Salz-Mischung kann in Form von Klumpen, Brocken oder Pulver vorliegen und eine Korngröße mit einem Äquivalentdurchmesser von etwa 0,01 mm bis etwa 1 cm aufweisen.

Der pulverförmige Farbstoff und/oder die pulverförmige Fixierer-Salz-Mischung weisen bevorzugt eine Korngröße mit einem Äquivalentdurchmesser in einem Bereich von etwa 0,01 mm bis etwa 2 mm, bevorzugt in einem Bereich von etwa 0,1 mm bis etwa 1 mm und besonders bevorzugt in einem Bereich von etwa 0,3 mm bis etwa 0,7 mm auf. Der Vorteil kleiner Korngrößen liegt in einem verbesserten Löslichkeitsverhalten zur schnelleren Erzeugung der Färbeflotte. Hierbei ist erfindungsgemäß ein Austreten der Fixierer-Salz-Partikel aus dem ersten Behälter in das umgebende Wasser oder die Färbeflotte möglich und von Vorteil. Für die Farbstoffpartikel oder Farbstofflösung gilt umgekehrt, dass diese vorteilhafterweise möglichst lange, und ggf. bis zur Auflösung oder Verdünnung im in den zweiten Behälter eindringenden Wasser oder in der in den zweiten Behälter eindringenden Färbeflotte, im zweiten Behälter verbleiben, um die Entstehung von Farbflecken oder ein Spotting/Spot-Bildung auf dem textilen Material zu vermeiden.

In einer bevorzugten Ausführungsform weist die Fixierer-Salz-Mischung eine Korngröße auf, die bevorzugt im Wesentlichen kleiner als oder gleich ist der Öffnungsweite der ersten Öffnung oder der Öffnungen des ersten Behälters. In einer besonders bevorzugten Ausführungsform weist der Farbstoff eine Korngröße auf, die größer ist als die Öffnungsweite der zweiten Öffnung oder Öffnungen des zweiten Behälters. Dadurch ist gegeben, dass der Farbstoff erst aus dem zweiten Behälter austritt, wenn er sich im Wasser, das in den zweiten Behälter eingedrungen ist, gelöst hat.

Bevorzugt ist der Fixierer der pulverförmigen Fixierer-Salz-Mischung ausgewählt aus einer Gruppe bestehend aus Natriummetasilikat, Kaliummetasilikat, Natriumcarbonat, Kaliumcarbonat, Ammoniumcarbonat, Natriumhydroxid und Kaliumhydroxyd, bevorzugt bestehend aus Natriummetasilikat, Natriumcarbonat und Natriumhydroxid. Bevorzugt ist das Salz ausgewählt aus einer Gruppe bestehend aus Natriumchlorid, Kaliumchlorid, Ammoniumchlorid, Natriumsulfat, Kaliumsulfat, Ammoniumsulfat, bevorzugt bestehend aus Natriumchlorid, Ammoniumchlorid, Natriumsulfat und Ammoniumsulfat, besonders bevorzugt bestehend aus Natriumchlorid und Natriumsulfat. Besonders bevorzugt besteht die Fixierer-Salz-Mischung aus Natriummetasilikat oder Natriumcarbonat als Fixierer und Natriumchlorid als Salz. Bevorzugt enthält die Fixierer-Salz-Mischung etwa 15 Gew.-% bis etwas 85 Gew.-% eines Fixierers und etwa 15 Gew.-% bis etwa 85 Gew.-% eines Salzes, jeweils bezogen auf die Fixierer-Salz-Mischung.

In einer Ausführungsform, bevorzugt zur Buntfarbenfärbung von textilen Materialien, enthält die Fixierer-Salz-Mischung den Fixierer in einer Menge in einem Bereich von etwa 65 Gew.-% bis etwa 85 Gew.-% und das Salz in einer Menge in einem Bereich von etwa 15 Gew.-% bis etwa 35 Gew.-%, bevorzugt Natriummetasilikat und/oder Natriumcarbonat in einer Menge in einem Bereich von etwa 65 Gew.-% bis etwa 85 Gew.-% und Natriumchlorid oder Natriumsulfat in einer Menge in einem Bereich von etwa 15 Gew.-% bis etwa 35 Gew.-%, jeweils bezogen auf die Fixierer-Salz-Mischung.

In einer weiteren Ausführungsform, bevorzugt zur Färbung von dunklen Farbtönen von textilen Materialien wie beispielsweise Schwarz, Nacht-Blau, Rubin Rot und/oder Espresso, enthält die Fixierer-Salz-Mischung das Salz in einer Menge in einem Bereich von etwa 65 Gew.-% bis etwa 85 Gew.-% und den Fixierer in einer Menge in einem Bereich von etwa 15 Gew.-% bis etwa 35 Gew.-%, bevorzugt Natriumchlorid oder Natriumsulfat in einer Menge in einem Bereich von etwa 65 Gew.-% bis etwa 85 Gew.-% und Natriummetasilikat und/oder Natriumcarbonat in einer Menge in einem Bereich von etwa 15 Gew.-% bis etwa 35 Gew.-%, jeweils bezogen auf die Fixierer-Salz-Mischung.

In einer bevorzugten Ausführungsform mit einer kombinierten Fixierer-Salz-Mischung liegt bevorzugt Natriumcarbonat in einer Menge in einem Bereich von etwa 65 Gew.-%, bevorzugt etwa 75 Gew.-%, bis etwa 100 Gew.-%, bevorzugt bis etwa 85 Gew.-%, Natriummetasilikat in einer Menge in einem Bereich von etwa 0 Gew.-%, bevorzugt von etwa 15 Gew.-%, bis etwa 50 Gew.-% und Natriumchlorid in einer Menge in einem Bereich von etwa 0 Gew.-%, bevorzugt von etwa 15 Gew.-%, bis etwa 80 Gew.-%, bevorzugt bis etwa 50 Gew.-%, jeweils bezogen auf die Fixierer-Salz-Mischung, vor. Die kombinierte Fixierer-Salz-Mischung ist bevorzugt für Buntfarbenfärbung und Färbung von dunklen Farbtönen einsetzbar.

Für das Färbesystem, dessen Verwendung und das Verfahren ist insbesondere, und ganz besonders für den Einsatz in Waschmaschinen oder Waschautomaten für den Privathaushalt, insbesondere solchen, die eine Wäschetrommel mit einem Fassungsvermögen von etwa 4 bis etwa 8 kg, etwa 4 bis etwa 7 kg oder etwa 5 bis etwa 6 kg Trockenwäsche aufweisen, - beim Einsatz des Salzes in mindestens einem ersten Behälter, insbesondere einem ersten Behälter, eine Gesamtmenge von etwa 50 g bis etwa 350 g, bevorzugt bis etwa 200 g, weiter bevorzugt etwa 150 g, Salz vorgesehen, oder - beim Einsatz des Salzes und Fixierers in mindestens zwei, insbesondere in zwei getrennten ersten Behältern oder der Fixierer-Salz-Mischung in mindestens einem, insbesondere einem ersten Behälter eine Gesamtmenge an Salz und Fixierer oder an Fixierer-Salz-Mischung von etwa 200 bis etwa 600 g, bevorzugt etwa 350 bis etwa 450 g, besonders bevorzugt etwa 400 g vorgesehen.

Bevorzugt enthält der zweite Behälter, je nach gewünschtem Färbeergebnis, mindestens einen weiteren Stoff ausgewählt aus der Gruppe bestehend aus Farbstoffen, Lösungsmitteln und Hilfsmitteln, bevorzugt den oder die Farbstoffe in Form einer Farbstofflösung im Lösungsmittel, besonders bevorzugt den oder die Farbstoffe in Form einer Farbstofflösung zusammen mit wenigstens einem Hilfsstoff im Lösungsmittel. Darüber hinaus kann eine Chemikalie zur Enthärtung von Wasser und/oder ein Gemisch zur Gebindekonservierung wässriger Polymeremulsionen und empfindlicher wässriger Produkte enthalten sein.

Bevorzugt ist der mindestens eine erfindungsgemäße Farbstoff ausgewählt aus der Gruppe bestehend aus Direktfarbstoffen, Substantivfarbstoffen und Reaktivfarbstoffen. Besonders bevorzugt ist der mindestens eine erfindungsgemäße Farbstoff ausgewählt aus einer Bandbreite mindestens umfassend Remazol Gelb RR gran., Levafix Brillantgelb CA gran., Levafix Gelb CA gran., Remazol Orange RR gran., Remazol Orange BN, Remazol Brillant Rot F3B gran., Remazol Tiefrot RGB, Remazol Rot RB gran. 133%, Remazol Ultrarot RGB, Remazol Rot RGB, Remazol Türkisblau G 133% -Z, Remazol Marineblau GG gran. 133%, Levafix Marineblau E-BNA gran., Levafix Marine CA gran., Remazol Brillant Blau RN gran., Remazol Brillant Violett 5R, Remazol Tiefschwarz N gran. 150°/, Remazol Schwarz B gran. 133% und/oder Remazol Tiefschwarz FHD-R fl 66% und/oder Mischungen aus den genannten Farbstoffen und Farblösungen. Der mindestens eine Farbstoff ist in einer Menge in einem Bereich von etwa 1 Gew.-% bis etwa 22 Gew.-%, bevorzugt in einem Bereich von etwa 1,5 Gew.-% bis etwa 19,5 Gew.-%, bei einer Schwarzfärbung in einem Bereich von etwa 55 Gew.-% bis etwa 75 Gew.-%, jeweils bezogen auf die Gesamtmenge der Farbstoffmischung, in dieser enthalten.

Vorzugsweise ist mindestens ein Farbstoff ein Reaktivfarbstoff wie beispielsweise Remazol^{®}. Reaktivfarbstoffe sind, die Strukturform betrachtet, "normale" Farbstoffe, die zusätzlich mindestens eine Reaktiv-Ankergruppe tragen. Die Reaktiv-Ankergruppe ist chemisch fest mit den Farbstoffmolekülen verbunden, ist chemisch sehr reaktiv und wird durch Zugabe von Alkali aktiviert. Bevorzugt ist Alkali im Fixierer oder der Fixierer-Salz-Mischung enthalten. Beim Färbevorgang geht die aktivierte Ankergruppe eine feste chemische Bindung mit den sogenannten Hydroxygruppen (OH-Gruppen) des Textils ein.

Als Lösungsmittel im zweiten Behälter zur Auflösung eines oder mehrerer erfindungsgemäßer Farbstoffe und gegebenenfalls Hilfsmittel kommen außer Wasser auch eine wässerige Harnstofflösung sowie Polyether, insbesondere ausgewählt aus Polyethylenglykol (abgekürzt "PEG") der Formel H(OC₂H₄)ₙOH mit n von 1 bis 4 und Polypropylenglykol (abgekürzt "PPG") der Formel H(OCH₂(CH₃)CH₂)ₘOH mit m von 1 bis 4, oder Mischungen hieraus in Frage. Bevorzugt ist das Lösemittel Wasser, bevorzugt in Form von enthärtetem Leitungswasser.

Ein bevorzugtes Hilfsmittel zur Gebindekonservierung setzt sich bevorzugt aus Chlor-Methyl-Isothiazolinon und/oder Methyl-Isothiazolinon zusammen und ist bevorzugt eine farblose bis leicht gelbliche Flüssigkeit. Bevorzugt weist das Hilfsmittel einen pH-Wert in einem Bereich von etwa 1,5 bis etwa 5,5, weiter bevorzugt in einem Bereich von etwa 2,5 bis etwa 4,5 und besonders bevorzugt in einem Bereich von etwa 3 bis etwa 4 auf. Eine übliche Einsatzmenge in Abhängigkeit zum Farbstoff liegt bevorzugt zwischen etwa 0,05% bis etwa 0,4%, bevorzugt bis etwa 0,1 Gew.-%, und weiter bevorzugt zwischen etwa 0,08% bis etwa 0,1%.

Besonders bevorzugt enthält eine erfindungsgemäße Farbstofflösung mindestens einen der vorgenannten Farbstoffe, gegebenenfalls mindestens ein Hilfsmittel, bevorzugt genau ein Hilfsmittel, bevorzugt in Form eines Hilfsmittels zur Gebindekonservierung oder eines Enthärtungsmittels, und im Übrigen Wasser, insbesondere in Form von enthärtetem Leitungswasser. Die Farbstofflösung enthält damit kein Salz, Alkali oder ähnliches, insbesondere keine Alkali- oder Erdalkalisalze, insbesondere kein Natriumchlorid und/oder kein Kaliumchlorid.

In einer besonders bevorzugten Ausführungsform des erfindungsgemäßen Färbesystems sind genau ein erster Behälter in Form eines Beutels und genau ein zweiter Behälter in Form einer Flasche vorgesehen. Der erste Behälter weist dabei mehrere erste und mehrere zweite Siegelnähte auf, wobei die zweiten Siegelnähte mindestens eine Unterbrechung zur Verfügungstellung mindestens einer Öffnung nach Aufschneiden aufweisen. Bevorzugt ist in den zweiten Siegelnähten genau eine Unterbrechung vorgesehen. Im ersten Behälter sind in der bevorzugten Ausführungsform mindestens ein Salz und mindestens ein Fixierer, bevorzugt genau ein Salz und ein Fixierer, in Form einer Fixierer-Salz-Mischung enthalten. Das Salz ist bevorzugt Natrium- und/oder Kaliumchlorid, der Fixierer Natriumcarbonat und/oder Natrium- oder Kaliummetasilikat. Der zweite Behälter weist bevorzugt genau eine Öffnung auf. Diese ist bevorzugt im Flaschenhals angeordnet. Die Öffnung im zweiten Behälter wird geöffnet durch Abschrauben eines Verschlusses, insbesondere in Form eines Klapp- oder Drehverschlusses. Die zweite Öffnung weist bevorzugt eine geringere Öffnungsweite auf, als diese durch einen Innendurchmesser eines Flaschenhalses möglich wäre. Daher ist im Öffnungsbereich des Flaschenhalses, bevorzugt bündig mit einer Oberkante desselben, eine Platte vorgesehen, die bevorzugt etwa in der Mitte die Öffnung aufweist. Die mindestens eine erste Öffnung im ersten Behälter weist bevorzugt eine Öffnungsweite in einem Bereich von etwa 0,4 cm bis etwa 2,5 cm auf. Die zweite Öffnung im zweiten Behälter weist eine Öffnungsweite von etwa 1 mm bis etwa 3 mm auf. Im zweiten Behälter ist ein wässrige Farbstofflösung aus mindestens einem Farbstoff, ggf. einem der weiter oben genannten Hilfsmitte, und im Übrigen Wasser enthalten. Die Farbstofflösung weist kein Salz oder Alkali auf, sie ist insbesondere Salzfrei. Bevorzugt weist die Fixierer-Salz-Mischung und die Farbstofflösung diejenigen Zusammensetzungen auf, die weiter oben als bevorzugt oder besonders bevorzugt bereits angeführt worden.

Je nach Ausführungsform werden die erste Öffnung oder die erste Gruppe von mehreren Öffnungen des ersten Behälters mit der Fixierer-Salz-Mischung und/oder die zweite Öffnung oder die zweite Gruppe von mehreren Öffnungen des zweiten Behälters mit dem Farbstoff, bevor die Behälter in den dritten Behälter hineingegeben werden, freigelegt. Das Freilegen geschieht bevorzugt beim ersten Behälter bevorzugt durch Entfernen mindestens einer ersten Siegelnaht. Auf Grund des Entfernens der einen ersten Siegelnaht ist die bevorzugte eine erste Öffnung, die eine definierte Öffnung bildet und zwischen mindestens einer zweiten Siegelnaht angeordnet ist beziehungsweise eine solche unterbricht, freigelegt. In einer weiteren Ausführungsform ist der bevorzugt erste Behälter mindestens in Teilbereichen ein wasserdurchlässiger Faserbeutel, und Poren, die die bevorzugt erste Gruppe von mehreren Öffnungen bilden, sind von einer Schicht, bevorzugt Transportfolie, besonders bevorzugt Kunststofffolie abgedeckt. Um die bevorzugte erste Gruppe von mehreren Öffnungen freizulegen wird die Schicht oder Folie entfernt. Die zweite Öffnung oder die zweite Gruppe von mehreren Öffnungen des zweiten Behälters für den Farbstoff ist bevorzugt mittels eines Verschlusses ausgewählt aus der Gruppe bestehend aus Klappverschluss, Drehverschluss, Verschluss mit Sollbruch- oder Aufreißnaht, Siegelnaht und nicht wasserlösliche Schicht, insbesondere Kunststofffolie, und wasserlösliche oder alkalilösliche Schicht oder Stopfen verschlossen, welcher in einer Ausführungsform entfernt und/oder aufgeklappt wird, um die zweite Öffnung oder die zweite Gruppe von mehreren Öffnungen freizulegen.

Bevorzugt wird eine Abgabe der Fixierer-Salz-Mischung zeitlich vor einem Beginn der Abgabe des Farbstoffes aus seinem Behälter in den dritten Behälter begonnen. Der Farbstoff umfasst bevorzugt den Reaktiv-Farbstoff mit der mindestens einen Reaktiv-Ankergruppe. Die Reaktiv-Ankergruppe ist chemisch sehr reaktiv und ist in Kombination mit der Fixierer-Salz-Mischung aktivierbar. Beim Färbevorgang geht die aktivierte Ankergruppe eine feste Bindung mit den sogenannten Hydroxygruppen (OH-Gruppen) des textilen Materials ein, ohne die Bindung zum Reaktiv-Farbstoff zu verlieren. Eine wichtige Voraussetzung ist, dass die Fasern des textilen Materials Gruppierungen wie z.B. Hydroxy- oder auch Amin-beziehungsweise Aminofunktionen aufweisen, die eine Bindung mit den Reaktiv-Ankergruppen eingehen. Wird der Farbstoff zeitgleich oder ohne die Fixierer-Salz-Mischung in dem dritten Behälter platziert und ein Wasch- beziehungsweise Färbeprogramm begonnen, dann gelangt nur ein sehr geringer Anteil des Reaktiv-Farbstoffes an die Fasern des textilen Materials. Der Reaktiv-Farbstoff reagiert mit dem in der Trommel befindendem Wasser und nicht mit den Hydroxyfunktionen der Fasern. Das Salz der bevorzugten Fixierer-Salz-Mischung bewirkt eine Verminderung der Löslichkeit des an sich sehr gut wasserlöslichen Reaktiv-Farbstoffes und verbessert die Affinität des Farbstoffes zu den Fasern. Auf Grund dieser Eigenschaften spielt die Reihenfolge, die Konzentration und die Temperatur beim Färbevorgang eine wichtige Rolle.

Bevorzugt ist der Beginn der Abgabe der Fixierer-Salz-Mischung aus dem ersten Behälter in den dritten Behälter verzögert nach dem Beginn eines Wasch- beziehungsweise Färbeprogrammes. Dadurch ist nicht nur der Beginn der Abgabe des Farbstoffes verzögert nach dem Beginn der Abgabe der Fixierer-Salz-Mischung, sondern auch bevorzugt der Beginn der Abgabe der Fixierer-Salz-Mischung nach dem Beginn des Wasch- beziehungsweise Färbeprogramms. Der Vorteil ist, dass die Fixierer-Salz-Mischung mit bereits einer größeren eingespülten Menge Wasser in den dritten Behälter abgegeben wird. Die Fixierer-Salz-Mischung verteilt sich gleichmäßig in der Trommel und wirkt nicht punktuell auf das textile Material ein.

Vorzugsweise beginnt die Fixierer-Salz-Mischung aus dem ersten Behälter auszutreten, wenn sie in Kontakt mit Wasser kommt, sich mit diesem vermischt oder in diesem löst. In einer Ausführungsform tritt die pulverförmige Fixierer-Salz-Mischung ohne ein Einwirken von Wasser nur unwesentlich oder in geringer Menge aus der ersten Öffnung oder der ersten Gruppe von mehreren Öffnungen aus. Erst wenn ausreichend Wasser, sei es durch ein herkömmliches Einspülsystem oder das sogenanntes Jet-System, in dem dritten Behälter verteilt ist, dringt dieses durch die erste Öffnung oder die erste Gruppe von mehreren Öffnungen ein und vermengt sich mit der Fixierer-Salz-Mischung oder löst diese. Bevorzugt wird das Austreten der Fixierer-Salz-Mischung durch eine Rotation des dritten Behälters verstärkt. Die Fixierer-Salz-Mischung ist vermengt mit oder gelöst in Wasser im Wesentlichen nicht mehr pulverförmig vorliegend. In einer weiteren Ausführungsform tritt das Wasser durch die Poren, die die erste Gruppe von mehreren Öffnungen bilden, eines wasserdurchlässigen Faserbeutels in diesen ein, vermengt sich mit der Fixierer-Salz-Mischung oder löst diese, tritt durch die Poren wieder aus und verteilt sich gemeinsam mit der Fixierer-Salz-Mischung im dritten Behälter.

Dadurch, dass das Wasch- beziehungsweise Färbeprogramm der Waschmaschine nach dem Beginn bevorzugt zuerst einen Wasserzulauf öffnet und Wasser in den dritten Behälter gelangt, ist die Fixierer-Salz-Mischung bereits mit dem Wasser vermengt. Erst durch die anschließende Rotation der Trommel tritt in einer Ausführungsform der Farbstoff aus dem zweiten Behälter durch die zweite Öffnung oder die zweite Gruppe von mehreren Öffnungen aus.

In einer weiteren Ausführungsform, die den Austritt des Farbstoffes aus dem zweiten Behälter weiter verzögert, weist der zweite Behälter einen Verschluss auf, der als gießbarer Stopfen aus einem Material mit einem ausreichend niedrigen Schmelzpunkt ausgebildet ist. Der Stopfen verschließt die zweite Öffnung oder die zweite Gruppe von mehreren Öffnungen und löst sich bei Erreichen einer bestimmten Temperatur in der Nähe seines Schmelzpunktes oder an diesem auf. Das Material aus dem der gießfähige Stopfen gefertigt ist, ist an die optimale Wirktemperatur der Fixierer-Salz-Mischung und des Farbstoffes angepasst. Entsprechend löst sich der Stopfen, wenn die Wirkungen der Mischungen ihr Maximum erreicht haben.

In einer bevorzugten Ausführungsform ist der zweite Behälter mit einem Verschluss, der als alkalilösliche Schicht ausgebildet ist, versehen. Diese Schicht bedeckt die zweite Öffnung oder die zweite Gruppe von mehreren Öffnungen und löst sich auf, sobald diese in Kontakt mit der alkalihaltigen Fixierer-Salz-Mischung kommt. Dadurch ist gegeben, dass eine gewisse Menge der Fixierer-Salz-Mischung bereits im dritten Behälter enthalten ist. Besonders bei Waschmaschinen, bei denen das Wasser mittels Jet-System in den dritten Behälter rieselt, ist dies von Vorteil, da es keine wesentliche Rolle spielt zu welchem Zeitpunkt genügend Wasser in der Trommel enthalten ist. Der erste Behälter gibt seinen Inhalt erst ab, wenn das Wasser sich mit der Fixierer-Salz-Mischung vermengt oder diese gelöst hat, woraufhin sich die alkalilösliche Schicht des zweiten Behälters löst.

Bevorzugt wird die Fixierer-Salz-Mischung und/oder der Farbstoff dosiert abgegeben. Diese dosierte Abgabe ist durch die Form und Gestaltung des ersten Behälters und des zweiten Behälters gegeben.

Der erste Behälter ist in einer Ausführungsform auf eine bestimmte Menge Wasser angewiesen, die über die Zeit die pulverförmige Fixierer-Salz-Mischung vermengt oder diese löst und über die erste Öffnung oder die erste Gruppe von mehreren Öffnungen aus dem ersten Behälter austreten lässt. Der zweite Behälter weist auf Grund des Durchmessers der zweiten Öffnung oder der zweiten Gruppe von mehreren Öffnungen eine dosierte oder zeitverzögerte Abgabe des Farbstoffes auf. Die zweite Öffnung oder die zweite Gruppe von mehreren Öffnungen weist eine auf die Viskosität des Farbstoffes bezogen definierte Öffnung auf.

In einer Ausführungsform sind die Fixierer-Salz-Mischung und der Farbstoff in jeweils einem Faserbeutel aufgenommen und treten bevorzugt durch die Poren der Faserbeutel in den dritten Behälter aus. Die Poren des Beutels mit der Fixierer-Salz-Mischung sind im Verhältnis zur Korngröße der Fixierer-Salz-Mischung gleichgroß oder größer als diese. Ein Austreten der Fixierer-Salz-Mischung ist auch ohne ein Eintreten von Wasser in den Beutel möglich, wird jedoch durch dieses verstärkt. Die Poren des Beutels mit dem Farbstoff sind im Verhältnis zur Korngröße des Farbstoffes kleiner als diese. Ein Austreten des Farbstoffes ist in ungelöster Form nicht möglich.

Schließlich betrifft die vorliegende Erfindung eine Verwendung eines erfindungsgemäßen Färbesystems zum Färben von textilen Materialien aus bevorzugt Baumwolle, Naturfasern und/oder Polyamid. Die Verwendung erfolgt bevorzugt derart, dass ein erfindungsgemäßes Färbesystem, bestehend aus mindestens einer Fixierer-Salz-Mischung in mindestens einem ersten Behälter und mindestens einem Farbstoff, insbesondere in Form einer Farbstofflösung, in mindestens einem zweiten Behälter, zusammen mit einem zu färbenden textilen Material in einen dritten Behälter gegeben wird. Der Einsatz des Färbesystems in dem dritten Behälter, der bevorzugt eine Wäschetrommel einer Waschmaschine ist, geschieht ohne den Umweg über ein Einspülfach einer Waschmaschine.

Mit dem erfindungsgemäßen Verfahren wird ein für den Endverbraucher einfach zu handhabendes Produkt zum Färben von textilen Materialien zur Verfügung gestellt. Das Verfahren definiert ein sogenanntes Controlled-Release-System. Auf Grund der Ausführungsformen der ersten und zweiten Behälter werden Salz oder Fixierer-Salz-Mischung und Farbstoff verzögert und/oder dosiert abgegeben. Erfindungsgemäß werden das Salz oder die Fixierer-Salz-Mischung und der Farbstoff nicht zeitgleich in den dritten Behälter abgegeben, sondern zeitlich zueinander versetzt. Weiter bevorzugt beginnt zuerst das Wasch- beziehungsweise Färbeprogramm der Waschmaschine, bevor in einem weiteren Schritt das Salz oder die Fixierer-Salz-Mischung aus dem ersten Behälter und danach in einem weiteren Schritt der Farbstoff aus dem zweiten Behälter austritt.

## Patentansprüche

1. Verfahren zum Färben von textilen Materialien umfassend die Schritte
(i) Bereitstellen eines Färbesystems (1) für textile Materialien umfassend mindestens ein Salz in mindestens einem ersten Behälter (10) und mindestens einen Farbstoff in mindestens einem zweiten Behälter (40, 50), wobei der mindestens eine erste Behälter (10) eine erste Öffnung oder eine erste Gruppe von mehreren Öffnungen (12), und der mindestens eine zweite Behälter (40, 50) eine zweite Öffnung oder eine zweite Gruppe von mehreren Öffnungen (42, 52) aufweist, wobei der mindestens eine zweite Behälter (40, 50) derart ausgebildet ist, dass der Beginn der Abgabe des oder der Farbstoffe zeitlich nach der teilweisen oder vollständigen Abgabe des Salzes aus dem mindestens einen ersten Behälter (10) geschieht, wobei sich der zeitliche Verzug des Beginnes der Abgabe des Farbstoffes auf den Beginn der Abgabe des Salzes bezieht und in einem Bereich von etwa 1 Minute bis etwa 10 Minuten liegt;
(ii) Überführen der in Schritt (i) erhaltenen Behälter in einen dritten Behälter;
(iii) Beladen des dritten Behälters mit mindestens einem zu färbenden textilen Material; und
(iv) Zugabe von Wasser zu dem wie in Schritt (ii) und (iii) beladenen dritten Behälter, wobei
(v) das mindestens eine Salz und/oder mindestens ein Fixierer oder mindestens eine Fixierer-Salz-Mischung aus dem mindestens einen ersten Behälter und/oder der mindestens eine Farbstoff aus dem mindestens einen zweiten Behälter durch die Öffnung oder Öffnungen des jeweiligen Behälters zeitlich verzögert und/oder dosiert abgegeben werden,
(vi) das mindestens eine Salz und/oder der mindestens eine Fixierer oder die mindestens eine Fixierer-Salz-Mischung aus dem mindestens einen ersten Behälter (10) auszutreten beginnt bevor der mindestens eine Farbstoff aus dem mindestens einen zweiten Behälter (40, 50) auszutreten beginnt; und
(vii) das Salz und/oder der Fixierer oder die Fixierer-Salz-Mischung und/oder der mindestens eine Farbstoff, wie vorstehend unter (vi) genannt, in dem jeweiligen Behälter suspendiert und/oder gelöst in Wasser sind.

2. Verfahren gemäß Anspruch 1, wobei
(viii) in Schritt (i) das Färbesystem definiert ist als ein Färbesystem (1) für textile Materialien umfassend mindestens ein Salz in mindestens einem ersten Behälter (10) und mindestens einen Farbstoff in mindestens einem zweiten Behälter (40, 50), wobei der mindestens eine erste Behälter (10) eine erste Öffnung oder eine erste Gruppe von mehreren Öffnungen (12), und der mindestens eine zweite Behälter (40, 50) eine zweite Öffnung oder eine zweite Gruppe von mehreren Öffnungen (42, 52) aufweist, wobei der mindestens eine zweite Behälter (40, 50) derart ausgebildet ist, dass der Beginn der Abgabe des oder der Farbstoffe zeitlich nach der teilweisen oder vollständigen Abgabe des Salzes aus dem mindestens einen ersten Behälter (10) geschieht, wobei sich der zeitliche Verzug des Beginnes der Abgabe des Farbstoffes auf den Beginn der Abgabe des Salzes bezieht und in einem Bereich von etwa 1 Minute bis etwa 10 Minuten liegt,
(a) zusätzlich umfassend mindestens einen Fixierer in mindestens einem weiteren ersten Behälter (10); oder
(b) zusätzlich umfassend mindestens einen Fixierer zusammen mit dem mindestens einen Salz in mindestens einer Fixierer-Salz-Mischung in dem mindestens einen ersten Behälter (10); und/oder
(c) wobei der zweite Behälter mindestens einen weiteren Stoff ausgewählt aus der Gruppe bestehend aus Farbstoffen, Lösungsmitteln und Hilfsstoffen enthält, und bevorzugt den oder die Farbstoffe in Form einer Farbstofflösung im Lösungsmittel, besonders bevorzugt den oder die Farbstoffe in Form einer Farbstofflösung zusammen mit mindestens einem Hilfsstoff im Lösungsmittel, enthält; und/oder
(ix) in Schritt (i) zusätzlich ein Öffnen von Verschlüssen sämtlicher derjenigen bereitgestellten Behälter (10, 40, 50) erfolgt, deren Verschlüsse ausgewählt sind aus der Gruppe bestehend aus nicht-wasserlöslichen Verschlüssen ausgewählt aus der Gruppe bestehend aus Klappverschlüssen, Drehverschlüssen, Verschlüssen mit Sollbruch- oder Aufreißnaht, Siegelnähten und nicht-wasserlöslichen Schichten wie insbesondere Kunststofffolien, wobei die Öffnung oder Öffnungen des zweiten Behälters (40, 50) bevorzugt mit solchen Verschlüssen, die wasserlöslich und/oder alkalilöslich sind, verschlossen sind, und wobei die wasserlöslichen und/oder alkalilöslichen Verschlüsse insbesondere ausgewählt sind aus der Gruppe bestehend aus wasserlöslichen und/oder alkalilöslichen Schichten und Stopfen, insbesondere wasserlöslichen und/oder alkalilöslichen Schichten und Stopfen umfassend eine oder mehrere Fettsäuren ausgewählt aus der Gruppe bestehend aus gesättigten Fettsäuren, insbesondere ausgewählt aus der Gruppe bestehend aus Decansäure (C₉H₁₉COOH), Undecansäure (C₁₀H₂₁COOH), Dodecansäure (C₁₁H₂₃COOH), Tridecansäure (C₁₂H₂₅COOH), Tetradecansäuse (C₁₃H₂₇COOH), Pentadecansäure (C₁₄H₂₉COOH), Hexadecansäre (C₁₅H₃₁COOH), Heptadecansäure (C₁₆H₃₃COOH), Octadecansäure (C₁₇H₃₅COOH), Nonadecansäure (C₁₈H₃₇COOH) und Eicosansäure (C₁₉H₃₉COOH); und/oder
(x) in Schritt (iv) zu Beginn die Öffnung oder Öffnungen des mindestens einen zweiten Behälters (40, 50) jeweils mittels wasserlöslicher und/oder alkalilöslicher Verschlüsse ausgewählt sind aus der Gruppe bestehend aus Klappverschlüssen, Drehverschlüssen, Verschlüssen mit Sollbruch- oder Aufreißnaht, Siegelnähten und nicht-wasserlöslichen Schichten wie insbesondere Kunststofffolien, wobei die Öffnung oder Öffnungen des zweiten Behälters (40, 50) bevorzugt mit solchen Verschlüssen, die wasserlöslich und/oder alkalilöslich sind, verschlossen sind, und wobei die wasserlöslichen und/oder alkalilöslichen Verschlüsse insbesondere ausgewählt sind aus der Gruppe bestehend aus wasserlöslichen und/oder alkalilöslichen Schichten und Stopfen, insbesondere wasserlöslichen und/oder alkalilöslichen Schichten und Stopfen umfassend eine oder mehrere Fettsäuren ausgewählt aus der Gruppe bestehend aus gesättigten Fettsäuren, insbesondere ausgewählt aus der Gruppe bestehend aus Decansäure (C₉H₁₉COOH), Undecansäure (C₁₀H₂₁COOH), Dodecansäure (C₁₁H₂₃COOH), Tridecansäure (C₁₂H₂₅COOH), Tetradecansäuse (C₁₃H₂₇COOH), Pentadecansäure (C₁₄H₂₉COOH), Hexadecansäre (C₁₅H₃₁COOH), Heptadecansäure (C₁₆H₃₃COOH), Octadecansäure (C₁₇H₃₅COOH), Nonadecansäure (C₁₈H₃₇COOH) und Eicosansäure (C₁₉H₃₉COOH).

3. Verfahren gemäß Anspruch 2 oder 3, wobei
(xi) der mindestens eine Farbstoff im Vergleich zu dem mindestens einen Salz und/oder dem mindestens einen Fixierer oder der mindestens einen Fixierer-Salz-Mischung durch die Öffnung oder Öffnungen des jeweiligen Behälters zeitlich verzögert abgegeben wird; und/oder
(xii) das mindestens eine Salz und/oder der mindestens eine Fixierer oder die mindestens eine Fixierer-Salz-Mischung aus dem mindestens einen ersten Behälter (10) zumindest teilweise ausgetreten ist, bevor der mindestens eine Farbstoff, insbesondere die Farbstofflösung aus dem mindestens einen zweiten Behälter (40, 50) auszutreten beginnt.

4. Verfahren gemäß einem oder mehreren der Ansprüche 1 bis 3, wobei der dritte Behälter eine Wäschetrommel einer Waschmaschine ist.

## Claims

1. Method for dyeing textile materials comprising the steps of
(i) providing a dyeing system (1) for textile materials comprising at least one salt in at least one first container (10) and at least one dye in at least one second container (40, 50), wherein the at least one first container (10) has a first opening or a first group of multiple openings (12), and the at least one second container (40, 50) has a second opening or a second group of multiple openings (42, 52), wherein the at least one second container (40, 50) is configured such that the start of the dispensing of the dye(s) occurs temporally after the partial or complete dispensing of the salt from the at least one first container (10), wherein the temporal delay of the start of the dispensing of the dye relates to the start of the dispensing of the salt and is in a range of about 1 minute to about 10 minutes;
(ii) transferring the containers obtained in step (i) into a third container;
(iii) charging the third container with at least one textile material to be dyed; and
(iv) adding water to the third container charged as in steps (ii) and (iii) wherein
(v) the at least one salt and/or at least one fixing agent or at least one fixing agent-salt mixture from the at least one first container and/or the at least one dye from the at least one second container are dispensed through the opening or openings of the respective container in a time-delayed and/or metered manner,
(vi) the at least one salt and/or the at least one fixing agent or the at least one fixing agent-salt mixture begins to flow out of the at least one first container (10) before the at least one dye begins to flow out of the at least one second container (40, 50); and
(vii) the salt and/or the fixing agent or the fixing agent-salt mixture and/or the at least one dye as mentioned above under (vi) are suspended and/or dissolved in water in the respective container.

2. Method according to claim 1, wherein
(viii) in step (i) the dyeing system is defined as a dyeing system (1) for textile materials comprising at least one salt in at least one first container (10) and at least one dye in at least one second container (40, 50), wherein the at least one first container (10) has a first opening or a first group of multiple openings (12), and the at least one second container (40, 50) has a second opening or a second group of multiple openings (42, 52), wherein the at least one second container (40, 50) is configured such that the start of the dispensing of the dye(s) occurs temporally after the partial or complete dispensing of the salt from the at least one first container (10), wherein the temporal delay of the start of the dispensing of the dye relates to the start of the dispensing of the salt and is in a range of about 1 minute to about 10 minutes,
(a) further comprising at least one fixing agent in at least one further first container (10); or
(b) further comprising at least one fixing agent together with the at least one salt in at least one fixing agent-salt mixture in the at least one first container (10); and/or
(c) wherein the second container contains at least one further substance selected from the group consisting of dyes, solvents and additves, and preferably contains the dye or dyes in the form of a dye solution in the solvent, particularly preferably contains the dye or dyes in the form of a dye solution together with at least one additive in the solvent; and/or
(ix) in step (i), additionally an opening of closures of all those provided containers (10, 40, 50) occurs, whose closures are selected from the group consisting of non-water-soluble closures selected from the group consisting of flap closures, twist closures, closures with predetermined breaking or tear-off seam, sealing seams and non-water-soluble layers such as, in particular, plastic films, wherein the opening or openings of the second container (40, 50) are preferably closed with such closures which are water soluble and/or alkali soluble, and wherein the water-soluble and/or alkali-soluble closures are in particular selected from the group consisting of water-soluble and/or alkali-soluble layers and stoppers, in particular water-soluble and/or alkali-soluble layers and stoppers comprising one or more fatty acids selected from the group consisting of saturated fatty acids, in particular selected from the group consisting of decanoic acid (C₉H₁₉COOH), undecanoic acid (C₁₀H₂₁COOH), dodecanoic acid (C₁₁H₂₃COOH), tridecanoic acid (C₁₂H₂₅COOH), tetradecanoic acid (C₁₃H₂₇COOH), pentadecanoic acid (C₁₄H₂₉COOH), hexadecanoic acid (C₁₅H₃₁COOH), heptadecanoic acid (C₁₆H₃₃COOH), octadecanoic acid (C₁₇H₃₅COOH), nonadecanoic acid (C₁₈H₃₇COOH) and eicosanoic acid (C₁₉H₃₉COOH); and/or
(x) in step (iv), at the beginning, the opening or openings of the at least one second container (40, 50) are each selected by means of water-soluble and/or alkali-soluble closures from the group consisting of flap closures, twist closures, closures with predetermined breaking or tear-open seam, sealing seams and non-water-soluble layers such as, in particular, plastic films, wherein the opening or openings of the second container (40, 50) are preferably closed with such closures which are water soluble and/or alkali soluble, and wherein the water-soluble and/or alkali-soluble closures are in particular selected from the group consisting of water-soluble and/or alkali-soluble layers and stoppers, in particular water-soluble and/or alkali-soluble layers and stoppers comprising one or more fatty acids selected from the group consisting of saturated fatty acids, in particular selected from the group consisting of decanoic acid (C₉H₁₉COOH), undecanoic acid (C₁₀H₂₁COOH), dodecanoic acid (C₁₁H₂₃COOH), tridecanoic acid (C₁₂H₂₅COOH), tetradecanoic acid (C₁₃H₂₇COOH), pentadecanoic acid (C₁₄H₂₉COOH), hexadecanoic acid (C₁₅H₃₁COOH), heptadecanoic acid (C₁₆H₃₃COOH), octadecanoic acid (C₁₇H₃₅COOH), nonadecanoic acid (C₁₈H₃₇COOH) and eicosanoic acid (C₁₉H₃₉COOH).

3. Method according to claim 2 or 3, wherein
(xi) the at least one dye is dispensed through the opening or openings of the respective container with a temporal delay compared to the at least one salt and/or the at least one fixing agent or the at least one fixing agent-salt mixture; and/or
(xii) the at least one salt and/or the at least one fixing agent or the at least one fixing agent-salt mixture has at least partially escaped from the at least one first container (10) before the at least one dye, in particular the dye solution, begins to escape from the at least one second container (40, 50).

4. Method according to one or more of claims 1 to 3, wherein the third container is a laundry drum of a washing machine.

## Revendications

1. Procédé de teinture de matières textiles comprenant les étapes suivantes
(i) fournir un système de teinture (1) pour des matériaux textiles comprenant au moins un sel dans au moins un premier récipient (10) et au moins un colorant dans au moins un deuxième récipient (40, 50), ledit au moins un premier récipient (10) ayant une première ouverture ou un premier groupe de plusieurs ouvertures (12), et ledit au moins un deuxième récipient (40, 50) ayant une deuxième ouverture ou un deuxième groupe de plusieurs ouvertures (42, 52), ledit au moins un deuxième récipient (40, 50) étant conçu de telle sorte que le début de la délivrance dudit ou desdits colorants se produit temporellement après la délivrance partielle ou totale du sel à partir dudit au moins un premier récipient (10), le décalage temporel du début de ladite délivrance dudit colorant se rapportant au début de ladite délivrance dudit sel et se situant dans une plage d'environ 1 minute à environ 10 minutes ;
(ii) transférer lesdits récipients obtenus à ladite étape (i) dans un troisième récipient;
(iii) charger au moins un matériau textile à teindre dans ledit troisième récipient ; et
(iv) ajouter de l'eau audit troisième récipient chargé comme dans lesdites étapes (ii) et (iii), dans lequel
(v) ledit au moins un sel et/ou au moins un fixateur ou au moins un mélange dudit fixateur et dudit sel dudit au moins un premier récipient et/ou ledit au moins un colorant dudit au moins un deuxième récipient sont délivrés de manière temporellement retardée et/ou dosée par ladite ouverture ou lesdites ouvertures du récipient respectif,
(vi) ledit au moins un sel et/ou ledit au moins un fixateur ou ledit au moins un mélange dudit fixateur et dudit sel commence à sortir du au moins un premier récipient (10) avant que ledit au moins un colorant commence à sortir dudit au moins un deuxième récipient (40, 50) ; et
(vii) ledit sel et/ou ledit fixateur ou ledit mélange dudit fixateur et dudit sel et/ou ledit au moins un colorant mentionné aux points (vi) ci-dessus sont en suspension et/ou dissous dans ladite eau dans ledit récipient respectif.

2. Procédé selon la revendication 1, dans lequel
(viii) dans ladite étape (i), ledit système de teinture est défini comme un système de teinture (1) pour des matières textiles comprenant au moins un sel dans au moins un premier récipient (10) et au moins un colorant dans au moins un deuxième récipient (40, 50), ledit au moins un premier récipient (10) ayant une première ouverture ou un premier groupe de plusieurs ouvertures (12), et ledit au moins un deuxième récipient (40, 50) ayant une deuxième ouverture ou un deuxième groupe de plusieurs ouvertures (42, 52), ledit au moins un deuxième récipient (40, 50) étant conçu de telle sorte que le début de la délivrance dudit ou desdits colorants se produit temporellement après la délivrance partielle ou totale dudit sel à partir dudit au moins un premier récipient (10), le décalage temporel du début de ladite délivrance du colorant se rapportant au début de ladite délivrance du sel et se situant dans une plage d'environ 1 minute à environ 10 minutes,
(a) comprenant en outre au moins un fixateur dans au moins un autre premier récipient (10) ; ou
(b) comprenant en outre au moins un fixateur avec ledit au moins un sel dans au moins un mélange dudit fixateur et dudit sel dans ledit au moins un premier récipient (10) ; et/ou
(c) ledit deuxième récipient contenant au moins une autre substance choisie dans le groupe constitué par les colorants, les solvants et les adjuvants, et contenant de préférence ledit ou lesdits colorants sous forme d'une solution de colorant dans un solvant, de manière particulièrement préférée ledit ou lesdits colorants sous forme d'une solution de colorant conjointement avec au moins un adjuvant dans un solvant ; et/ou
(ix) à ladite étape (i), en outre une ouverture de fermetures de tous les récipients (10, 40, 50) mis à disposition se produit, dont lesdites fermetures sont choisies dans le groupe constitué par des fermetures non hydrosolubles choisies dans le groupe constitué de fermetures à rabat, de fermetures rotatives, de fermetures avec cordon de rupture ou de déchirure, de joints scellés et de couches non solubles dans l'eau comme en particulier des films plastiques, l'ouverture ou les ouvertures du deuxième récipient (40, 50) étant de préférence fermées par de telles fermetures qui sont solubles dans l'eau et/ou solubles dans les alcalis, et dans lequel les fermetures hydrosolubles et/ou solubles dans les alcalis sont choisies dans le groupe constitué de couches et de bouchons hydrosolubles et/ou solubles dans les alcalis, en particulier de couches et de bouchons hydrosolubles et/ou solubles dans les alcalis comprenant un ou plusieurs acides gras choisis dans le groupe constitué par les acides gras saturés, en particulier choisis dans le groupe constitué par l'acide décanoïque (C₉H₁₉COOH), l'acide undécanoïque (C₁₀H₂₁COOH), l'acide dodécanoïque (C₁₁H₂₃COOH), l'acide tridécanoïque (C₁₂H₂₅COOH), l'acide tétradécanoïque (C₁₃H₂₇COOH), acide pentadécanoïque (C₁₄H₂₉COOH), acides hexadécanoïque (C₁₅H₃₁COOH), acide heptadécanoïque (C₁₆H₃₃COOH), acide octadécanoïque (C₁₇H₃₅COOH), acide nonadécanoïque (C₁₈H₃₇COOH) et acide éicosanoïque (C₁₉H₃₉COOH) ; et/ou
(x) à ladite étape (iv) au début ladite ouverture ou lesdites ouvertures dudit au moins un deuxième récipient (40, 50) sont des fermetures solubles dans l'eau et/ou solubles dans les alcalis parmi respectivement sélectionnées le groupe constitué de fermetures à rabat, de fermetures rotatives, de fermetures avec un cordon de rupture ou de déchirure, de joints scellés et de couches non solubles dans l'eau comme en particulier des films plastiques, ladite ouverture ou lesdites ouvertures dudit deuxième récipient (40, 50) étant de préférence fermées par des fermetures qui sont solubles dans l'eau et/ou solubles dans les alcalis, et les fermetures solubles dans l'eau et/ou solubles dans les alcalis étant en particulier choisies dans le groupe constitué de couches et de bouchons solubles dans l'eau et/ou solubles dans les alcalis, en particulier de couches et de bouchons hydrosolubles et/ou solubles dans les alcalis comprenant un ou plusieurs acides gras choisis dans le groupe constitué par les acides gras saturés, en particulier choisis dans le groupe constitué par l'acide décanoïque (C₉H₁₉COOH), l'acide undécanoïque (C₁₀H₂₁COOH), acide dodécanoïque (C₁₁H₂₃COOH), acide tridécanoïque (C₁₂H₂₅COOH), acides tétradécanoïques (C₁₃H₂₇COOH), acide pen-tadécanoïque (C₁₄H₂₉COOH), acides hexadécanoïque (C₁₅H₃₁COOH), l'acide heptadécanoïque (C₁₆H₃₃COOH), l'acide octadécanoïque (C₁₇H₃₅COOH), l'acide nonadécanoïque (C₁₈H₃₇COOH) et l'acide éicosanoïque (C₁₉H₃₉COOH).

3. Procédé selon la revendication 2 ou 3, dans lequel
(xi) ledit au moins un colorant est délivré de manière retardée par rapport audit au moins un sel et/ou audit au moins un fixateur ou audit au moins un mélange de fixateur et de sel à travers ladite ouverture ou lesdites ouvertures du récipient respectif ; et/ou
(xii) ledit au moins un sel et/ou ledit au moins un fixateur ou ledit au moins un mélange dudit fixateur et dudit sel est sorti au moins partiellement dudit au moins un premier récipient (10) avant que ledit au moins un colorant, en particulier ladite solution de colorant, ne commence à sortir du au moins un deuxième récipient (40, 50).

4. Procédé selon une ou plusieurs des revendications 1 à 3, dans lequel ledit troisième récipient est un tambour d'une machine à laver.
